(19) Europäisches Patentamt
European Patent Office
Office européen des brevets

(11) **EP 0 986 713 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(21) Anmeldenummer: **99911582.7**

(22) Anmeldetag: **06.02.1999**

(51) Int Cl.⁷: $F16H\ 3/12$, $B60K\ 6/02$, $B60K\ 41/22$

(86) Internationale Anmeldenummer:
**PCT/DE99/00314**

(87) Internationale Veröffentlichungsnummer:
**WO 99/050572 (07.10.1999 Gazette 1999/40)**

(54) **ANTRIEBSSTRANG FÜR EIN KRAFTFAHRZEUG**

DRIVE TRAIN FOR A MOTOR VEHICLE

LIGNE DE TRANSMISSION POUR VEHICULE

(84) Benannte Vertragsstaaten:
**DE ES FR GB IT SE**

(30) Priorität: **27.03.1998 DE 19813563**
**26.10.1998 DE 19849156**

(43) Veröffentlichungstag der Anmeldung:
**22.03.2000 Patentblatt 2000/12**

(73) Patentinhaber: **ROBERT BOSCH GMBH**
**70442 Stuttgart (DE)**

(72) Erfinder:
• **LOEFFLER, Juergen**
**D-71364 Winnenden (DE)**
• **BOLZ, Martin-Peter**
**D-71720 Oberstenfeld (DE)**

(56) Entgegenhaltungen:
**EP-A- 0 681 118          WO-A-86/03269**
**DE-A- 4 202 083          FR-A- 2 630 868**

EP 0 986 713 B1

## Beschreibung

Stand der Technik

Die Erfindung geht aus von einem Antriebsstrang für ein Kraftfahrzeug nach der Gattung des Hauptanspruchs, der als hinlänglich bekannt gelten kann. Bei einem Antriebsstrang für ein Kraftfahrzeug bestehend aus einem Getriebe, einer Verbrennungskraftmaschine und einer dazwischen angeordneten Kupplung unterbricht die Kupplung bei einem Gangwechsel die von der Verbrennungskraftmaschine erzeugte und auf das Getriebe übertragene Zugkraft. Dieser prinzipbedingte Traktionsverlust beeinträchtigt die Fahrsicherheit und den Fahrkomfort.

Vorteile der Erfindung

Der erfindungsgemäße Antriebsstrang für ein Kraftfahrzeug mit den kennzeichnenden Merkmalen des Hauptanspruchs hat demgegenüber den Vorteil, daß bei einer gangwechselbedingten Unterbrechung der Zugkraft der Verbrennungskraftmaschine durch die Kupplung eine Zugkraft durch eine Vorrichtung übertragen wird. Dies erhöht die Fahrsicherheit und den Fahrkomfort. Besonders vorteilhaft ist es, die Zugkraft über eine Elektromaschine zu übertragen, insbesondere durch einen drehbar gelagerten Stator, wobei ein von der Verbrennungskraftmaschine angetriebener Rotor in eine Drehbewegung versetzt wird. In diesem Fall können auf besonders einfache Weise die Abläufe durch eine Steuerung geregelt werden. Es ist besonders effektiv diesen Stator direkt mit einer Getriebeausgangswelle zu koppeln. Ist der Rotor drehfest mit einer Motorausgangswelle verbunden, so ergeben sich keine nachteiligen Effekte durch etwaigen Schlupf beispielsweise eines Riemens. Wird der Rotor über eine feste Übersetzung der Ausgangswelle der Verbrennungskraftmaschine verbunden, so kann eine den spezifischen Gegebenheiten eines Antriebsstranges angepaßte Übersetzung gewählt werden. Wird die Elektromaschine noch zur Versorgung des elektrischen Bordnetzes und/oder zum Starten des Motors verwendet, so entfallen herkömmliche, bisher hierfür notwendige Komponenten. Wird in die Elektromaschine noch ein zusätzlicher Stator und Rotor integriert, so kann der zusätzliche Rotor zum einen zur Synchronisierung der Drehzahl der Getriebeeingangswelle und zum anderen zur Unterstützung bei einem Motorstart verwendet werden. Zum Starten der Verbrennungskraftmaschine ist es vorteilhaft, die Getriebeausgangswelle über eine Feststelleinrichtung zu blockieren. Die Elektromaschine um die Getriebeeingangswelle anzuordnen, ist besonders platzsparend bezüglich dem radialen Bauraum. Ein mechanisches Getriebe mit einer veränderlichen Übersetzung stellt eine besonders robuste Ausführung einer Vorrichtung zur Übertragung einer Zugkraft dar.

Zeichnung

Ein Ausführungsbeispiel der Erfindung ist in der Zeichnung dargestellt und in der nachfolgenden Beschreibung näher erläutert. Es zeigen

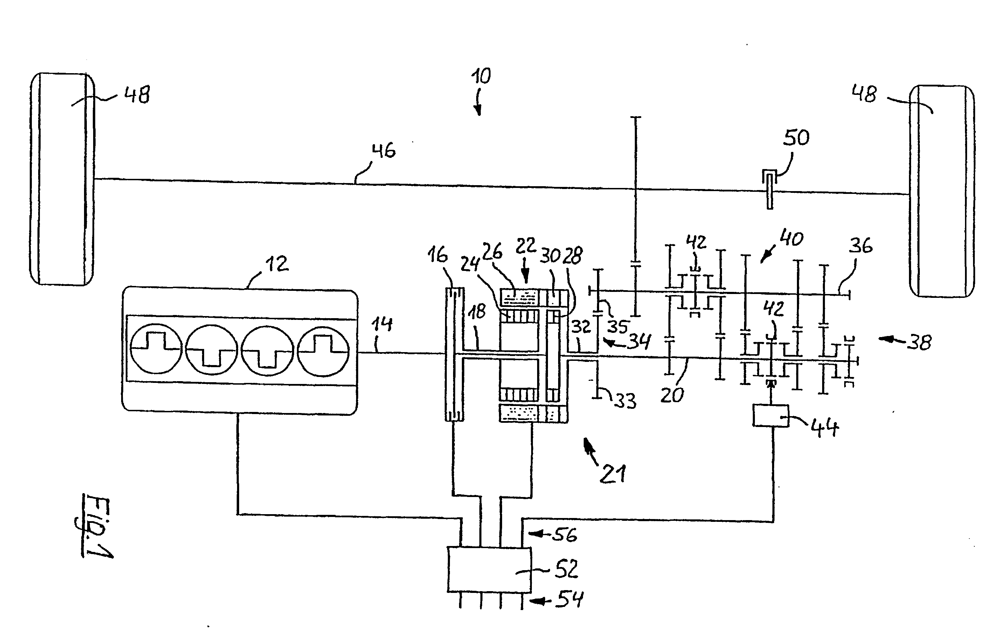

Figur 1    einen symbolisch dargestellten Antriebsstrang für ein Kraftfahrzeug mit einer Elektromaschine,

Figur 2    einen Antriebsstrang mit einer ersten abgewandelten Elektromaschine,

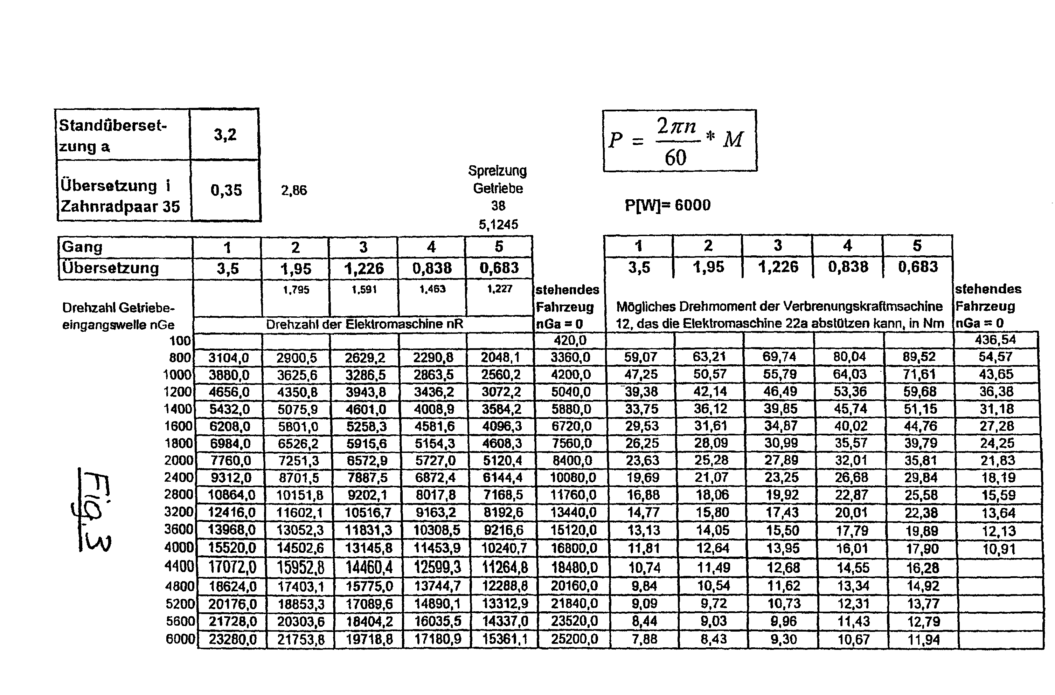

Figur 3    eine Tabelle mit verschiedenen Drehzahlen des Antriebsstrangs mit der ersten abgewandelten Elektromaschine und

Figur 4    einen Antriebsstrang mit einer zweiten abgewandelten Elektromaschine.

Beschreibung

In der Figur ist ein Antriebsstrang 10 für ein Kraftfahrzeug dargestellt, der eine Verbrennungskraftmaschine 12 aufweist, die über eine Ausgangswelle 14 mit einer Kupplung 16 zur Unterbrechung der Zugkraft bei einem Gangwechsel verbunden ist. An die Kupplung 16 schließt sich fluchtend mit der Ausgangswelle 14 eine Hohlwelle 18 an. Die Hohlwelle 18 ist fest mit einem äußeren Teil der Kupplung 16 verbunden, wodurch die Hohlwelle 18 drehfest mit der Ausgangswelle 14 der Verbrennungskraftmaschine 12 verbunden ist. Weiterhin ist zentrisch zur Hohlwelle 18 eine Getriebeeingangswelle 20 angeordnet. Die Getriebeeingangswelle 20 ist betriebsmäßig mit der Kupplung 16 verbunden, d. h. daß bei einer geschlossenen Kupplung 16 eine Zugkraft von der Verbrennungskraftmaschine 12 auf die Getriebeeingangswelle 20 übertragbar ist und bei geöffneter Kupplung 16 die von der Verbrennungskraftmaschine 12 erzeugte Zugkraft unterbrochen ist.

Um die Getriebeeingangswelle 20 ist weiterhin eine Vorrichtung angeordnet, die eine Elektromaschine 22 aufweist. Die Elektromaschine 22 besteht im wesentlichen aus einem ersten Rotor 24 und einem mit diesem in elektromagnetischer Weise zusammenwirkenden ersten drehbar gelagerten Stator 26. Der erste Rotor 24 ist auf der Hohlwelle 18 befestigt. Der erste Rotor 24 ist somit drehfest mit der Ausgangswelle 14 der Verbrennungskraftmaschine 12 verbunden und läßt sich insofern von der Verbrennungskraftmaschine 12 antreiben.

Weiterer Bestandteil der Elektromaschine 22 ist ein zweiter Rotor 28, der sich an den ersten Rotor 24 anschließt und drehfest mit der Getriebeeingangswelle 20 verbunden ist. Um den zweiten Rotor 28 ist ein zweiter Stator 30 angeordnet, der mit dem zweiten Rotor 28 in elektromagnetische Wechselwirkung tritt. Der erste Stator 26 und der zweite Stator 30 sind in diesem Fall drehfest miteinander und mit einer weiteren Hohlwelle 32 verbunden, die um die Getriebeeingangswelle 20 angeordnet ist. Auf der Hohlwelle 32 ist ein erstes Zahnrad 33 eines vorteilhafterweise ins Schnelle übersetzenden Zahnradpaares 34 angeordnet. Das zweite Zahnrad 35 des Zahnradpaares 34, das einen kleineren Durchmesser als das erste Zahnrad 33 hat, ist auf einer parallel zur Getriebeeingangswelle 20 angeordneten Getriebeausgangswelle 36 angeordnet. Auf diese Weise sind der erste Stator 26 und der zweite Stator 30 mit der Getriebeausgangswelle 36 verbunden, insbesondere ist es der erste größer ausgebildete Stator 26, der mit der Getriebeausgangswelle 36 zusammenwirkt. Die Getriebeeingangswelle 20 und die Getriebeausgangswelle 36 sind wesentliche Bestandteile eines mit 38 bezeichneten Getriebes, wobei im vorliegenden Ausführungsbeispiel ein automatisiertes Schaltgetriebe gezeigt ist. Es handelt sich somit um ein in seiner Funktion und seinem Aufbau an sich bekanntes mehrgängiges Wechselgetriebe mit mehreren Gängen, die jeweils durch miteinander kämmende Zahnradpaarungen 40 gebildet werden. Dabei ist jeweils eines der miteinander kämmenden Zahnräder fest mit der Getriebeeingangswelle 20 oder der Getriebeausgangswelle 36 verbunden, während das andere als Losrad auf der Getriebeeingangswelle 20 beziehungsweise der Getriebeausgangswelle 36 gelagert ist. Zur Schaltung der einzelnen Gänge wird das jeweilige Losrad über eine achsparallel auf der Getriebeeingangswelle 20 oder Getriebeausgangswelle 36 bewegliche Schalteinheit 42 in drehfeste Verbindung gebracht. Insofern ist eine Schalteinheit 42 eine Kupplung, die die Übertragung einer von der Verbrennungskraftmaschine 12 erzeugten Zugkraft unterbrechen kann. Diese Schalteinheit 42 kann beispielsweise eine Klauenkupplung, eine Schaltklaue oder eine Synchronisierkupplung bzw. Synchronisiermuffe sein. Jede Schalteinheit 42 wird jeweils von einem Getriebesteller 44 betätigt, wobei in der Zeichnung nur ein Getriebesteller 44 dargestellt ist. Es ist auch möglich, über eine geeignete mechanische Ankupplung mit einem Getriebesteller 44 mehrere Schalteinheiten 42 zu betätigen.

Die Getriebeausgangswelle 36 steht betriebsmäßig mit einer Achse 46 des Kraftfahrzeugs in Verbindung. Die Achse 46 treibt ihrerseits zwei Antriebsräder 48 an. Auf einer Seite der Achse 46 ist eine mit 50 bezeichnete Feststelleinrichtung dargestellt, wobei es sich in diesem Fall um einen sog. Hill-Holder handelt.

Zur Steuerung des Antriebsstrangs 10 ist eine Steuerung 52 vorgesehen. Die Steuerung 52 verfügt über mehrere Eingänge 54, an denen Signale, wie beispielsweise Motordrehzahl, übertragene Drehmomente, Geschwindigkeit, Gaspedal-, Ganghebelstellung, Kupplungszustand, aufzuwendende Energie für das elektrische Bordnetz u.s.w. anstehen. Mit Ausgängen 56 werden die Verbrennungskraftmaschine 12, die Kupplung 16, die Elektromaschine 22, der Getriebesteller 44, die Feststelleinrichtung 50 u.s.w. gesteuert.

Ist ein Gang eingelegt und fährt das Kraftfahrzeug, so wird von der Verbrennungskraftmaschine 12 über die Ausgangswelle 14, die geschlossene Kupplung 16 und die Getriebeeingangswelle 20 eine Zugkraft auf das Getriebe 38 übertragen. Über ein miteinander kämmendes Zahnradpaar 40 wird die Zugkraft auf die Getriebeausgangswelle 36, von dort auf die Achse 46 und schließlich auf die antreibenden Räder 48 übertragen. Bei einem Gangwechsel wird zunächst die Kupplung 16 geöffnet. Hierbei kommt es zu einer Unterbrechung der Zugkraft. Dadurch ändert sich die Beschleunigung des Kraftfahrzeugs. Insbesondere bei Beschleunigungsvorgängen ist die sich während des Gangwechsels einstellende Verzögerung des Kraftfahrzeugs nachhaltig. Durch den Einsatz der Elektromaschine 22 wird dies jedoch verhindert. Bei geöffneter Kupplung 16 treibt die Verbrennungskraftmaschine 12 weiterhin den Rotor 24 an, der seinerseits mit dem drehbar gelagerten Stator 26 in eine elektromagnetische Wechselwirkung tritt. Die Wicklungen des Rotors 26 und des Stators 26 werden von der Steuerung 52 hierbei so angesteuert, daß eine Kraftübertragung vom Rotor 24 auf den Stator 26 erfolgt. Der Stator 26 und der mit ihm verbundene Stator 30 werden in eine Drehbewegung um die Achse der Getriebeeingangswelle 20 versetzt. Dadurch dreht sich auch die Hohlwelle 32 und das miteinander kämmende Zahnradpaar 34. Somit wird auch die Getriebeausgangswelle 36 und schließlich werden über die Achse 46 die Räder 48 angetrieben. Die Ansteuerung der Elektromaschine 22 durch die Steuerung 52 erfolgt dabei vorteilhafterweise so, daß sich das Vorzeichen der Beschleunigung des Kraftfahrzeugs während eines Gangwechsels nicht ändert. In diesem Antriebsstrang 10 für ein Kraftfahrzeug mit einer Kupplung 16 zur Unterbrechung der Zugkraft bei einem Gangwechsel ist also zur Übertragung einer Zugkraft auf eine Abtriebsseite des Getriebes 38 eine Vorrichtung, die zum Beispiel die Elektromaschine 22 und das Zahnradpaar 34 aufweist, vorgesehen. Durch dieses Überbrücken des Getriebes 38 wird die Fahrsicherheit und der Fahrkomfort während eines Gangwechsels wesentlich gesteigert.

Während des eben beschriebenen Gangwechsels werden der Stator 30 und der fest auf der Getriebeeingangswelle 20 angeordnete zweite Rotor 28 von der Steuerung 52 so angesteuert, daß der zweite Rotor 28 die Getriebeeingangswelle 20 auf die erforderliche Synchrondrehzahl des neu einzulegenden Ganges beschleunigt bzw. abbremst. Auf diese Weise können die Schalteinheiten 42 sehr einfach ausgeführt werden, da keine Synchronisiereinrichtungen mehr notwendig sind.

Bei fahrendem Kraftfahrzeug dreht sich die Getriebeausgangswelle 36. Da das Zahnradpaar 34 vom Stator 26 aus gesehen ins Schnelle übersetzt, heißt dies umgekehrt, daß sie von der Getriebeausgangswelle 36 aus gesehen ins Langsame übersetzt. Dadurch ist gewährleistet, daß der Stator 26 eine niedrigere Rotationsgeschwindigkeit hat als der direkt mit der Drehzahl der Verbrennungskraftmaschine 12 gekoppelte Rotor 24. Durch diese Differenzdrehzahl kann die Elektromaschine 22 zur Versorgung des elektrischen Bordnetzes des Kraftfahrzeuges verwendet werden. Vorteilhaft hierbei ist auch, daß eine Versorgung gewährleistet ist, wenn das Kraftfahrzeug steht, da die Drehzahl des Stators 26 gleich Null ist und der Rotor 24 sich dennoch mit der von der Verbrennungskraftmaschine 12 erzeugten Drehzahl dreht. Damit die jeweils benötigte elektrische Energie ausreicht, wird hierzu der Rotor 24 durch die Steuerung 52 beispielsweise mit einem Erregerstrom beaufschlagt.

Die Elektromaschine 22 wird auch zum Starten der Verbrennungskraftmaschine 12 verwendet. Zunächst wird durch die Feststelleinrichtung 50 ein Drehen der Getriebeausgangswelle 36 verhindert. Bei geöffneter Kupplung 16 wird dann durch die Steuerung 52 der Rotor 24 der Elektromaschine 22 in eine Drehbewegung versetzt, bis der Verbrennungsprozeß in der Verbrennungskraftmaschine 12 einsetzt. Zusätzlich kann das Starten der Verbrennungskraftmaschine 12 durch einen vom Rotor 28 erzeugten Impulsstart unterstützt werden. Hierzu wird mit dem Rotor 28 die Getriebeeingangswelle 20 beschleunigt, ohne daß ein Gang eingelegt ist. Wird nun die Kupplung 16 geschlossen, so wird der Drehimpuls der Getriebeeingangswelle 20 und des Rotors 28 für das Starten der Verbrennungskraftmaschine 12 genutzt.

Abwandlungen der Elektromaschine 22 sind denkbar. Beispielsweise können der erste Stator 26 und der zweite Stator 30 zu einem einzigen Stator zusammengefaßt werden. Dadurch entfallen zwei getrennte Wicklungen. Wird jedoch ein zweiter Stator 30 verwendet, so kann dieser auch von dem ersten Stator 26 entkoppelt und beispielsweise nicht drehbar gelagert werden. Dadurch wird beispielsweise die Differenzdrehzahl zwischen dem zweiten Rotor 28 und dem zweiten Stator 30 größer, wodurch auch der elektrische Wirkungsgrad steigt. Hierzu kann, wie es auch in obiger Beschreibung möglich ist, die Verzahnung des einen Zahnrades des Zahnradpaares 34 am Außenumfang des ersten Stators 26 ausgebildet sein.

Wird ein Getriebe 38 verwendet, dessen Schalteinheiten 42 mit Synchronisiereinrichtungen versehen sind und wenn es beispielsweise aus Platzgründen notwendig ist, so können der zweite Rotor 28 und der zweite Stator 30 auch entfallen. Durch das Vorhandensein von Synchronisiereinrichtungen ist keine Anpassung der Drehzahl der Getriebeeingangswelle 20 an eine Synchronisierdrehzahl durch den Rotor 28 mehr erforderlich.

Die Anordnung der Elektromaschine 22 um die . Getriebeeingangswelle 20 ist nicht unbedingt notwendig. Ist genügend radialer Bauraum vorhanden, so kann der Rotor 24 der Elektromaschine 22 auch über eine feste Übersetzung, zum Beispiel durch einen Riemen und Riemenscheiben, an die Ausgangswelle 14 gekoppelt werden. Somit können Riemenscheiben mit einer Übersetzung gewählt werden, die den spezifischen Gegebenheiten eines Antriebsstranges 10 angepaßt ist. Auch die Verbindung des Stators 26 mit der Getriebeausgangswelle 36 kann anders ausgeführt sein. Beispielsweise kann die Drehbewegung des Stators 26 auch über einen Riemen auf irgendein Bauteil zwischen der Getriebeausgangswelle 36 und den Rädern 48 erfolgen. Wichtig ist nur, daß die zu übertragende Zugkraft durch die Elektromaschine 22 auf eine Abtriebsseite des Getriebes 38 erfolgt, so daß das Getriebe 38 während eines Gangwechsels überbrückt und weiterhin eine Zugkraft auf die Abtriebsseite des Getriebes übertragen wird.

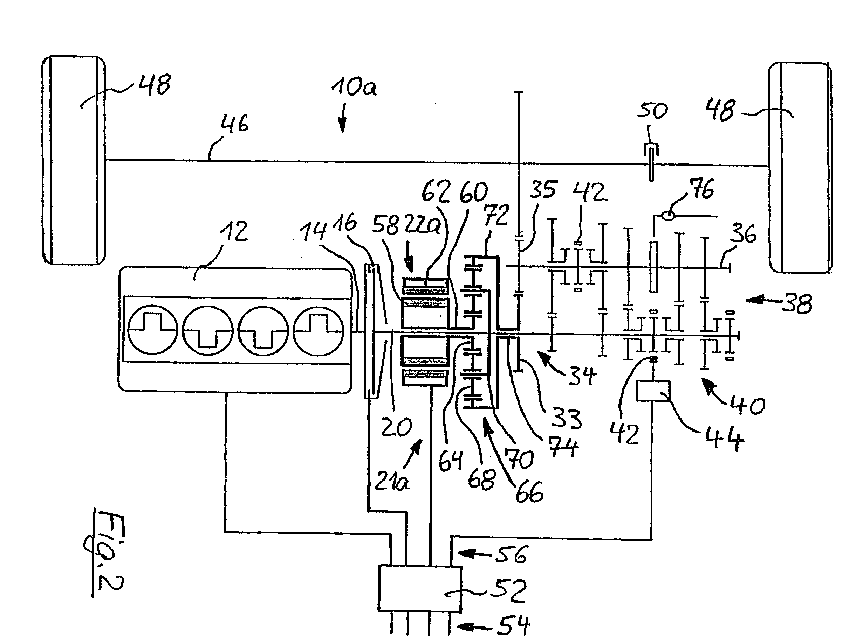

Die Funktion der Übertragung einer Zugkraft auf eine Abtriebsseite eines Getriebes 38 kann auch durch eine andere Vorrichtung erfüllt werden. Es ist denkbar, daß von der Ausgangswelle 14 der Verbrennungskraftmaschine 12 ein Getriebe mit einer stufenlos veränderlichen Übersetzung beispielsweise in Form eines Doppelkegelscheiben-Umschlingungsgetriebes angetrieben wird, welches ausgangsseitig ebenfalls auf die Getriebeausgangswelle 26 einwirkt. Die Übersetzung wird im normalen Fahrbetrieb von der Steuerung 52 so eingestellt, daß das Getriebe mit einer stufenlos veränderlichen Übersetzung, ohne eine Last zu übertragen, leer mitdreht. Bei einem Gangwechsel hat es dadurch schon die Übersetzung, die notwendig ist, damit das Kraftfahrzeug, ohne seine Geschwindigkeit unstetig zu ändern, weiterhin eine Zugkraft erfährt. In diesem Fall ist jedoch noch eine zusätzliche Kupplung für das Getriebe mit einer stufenlos veränderlichen Übersetzung notwendig, da ansonsten bei einem Kraftfahrzeugstillstand und laufender Verbrennungskraftmaschine 12 eine Zugkraft übertragen wird. Die vorstehende Variante zur Übertragung einer Zugkraft auf die Abtriebsseite mittels CVT in Kegelscheibenbauweise fällt nicht unter den Schutzbereich der Ansprüche. In der Figur 2 ist ein Antriebsstrang 10a mit einer abgewandelten Elektromaschine 22a dargestellt. Der Rotor 58 der Elektromaschine 22a hat eine Hohlwelle 60, die um die Getriebeeingangswelle 20 angeordnet ist. Der Stator 62 der Elektromaschine 22a ist drehfest beispielsweise am Getriebegehäuse befestigt. Auf der Hohlwelle 60 ist das Sonnenrad 64 eines als Planetengetriebe 66 ausgebildeten Verzweigungsgetriebes angeordnet, wodurch der Rotor 58 der Elektromaschine 22a mit dem Sonnenrad 64 verbunden ist. Statt eines Planetengetriebes 66 kann auch ein anderes Umlauf-Rädergetriebe als Verzweigungsgetriebe vorgesehen sein. Die Elektromaschine 22a wirkt somit mit dem Planetengetriebe 66 zusammen. Die Elektromaschine 22a und das Planetengetriebe 66 sind Bestandteil der Vorrichtung 21a. Das Sonnenrad 64 steht mit den Planetenrädern 68 im Eingriff, die im Planetenträger 70 des Planetengetriebes 66 angeordnet sind. Der Planetenträger 70 ist drehfest mit der Getriebeeingangswelle 20 verbunden. Alternativ kann der Planetenträger 70 auch mit der Motorausgangswelle 14 verbunden sein. Das Hohlrad 72 des Planetengetriebes 66, in dem die Planetenräder 68 umlaufen, ist mit einer Hohlwelle 74 verbunden, die auf der Getriebeeingangswelle 20 angeordnet ist. Auf der Hohlwelle 74 ist ebenfalls das Zahnrad 33 des Zahnradpaares 34 angeordnet. Somit wirkt das Hohlrad 72 auf die Getriebeausgangswelle 36 ein. Ferner ist in dem Getriebe 38 des Antriebsstrangs 10a noch eine Parksperre 76 vorgesehen.

Für die Drehzahl $n_R$ des Rotors 58 gilt:

$$n_R = (1+a)*n_{Ge}-a*n_H$$

Hierbei ist:

$n_R$ die Drehzahl des Rotors 58,
$n_{Ge}$ die Drehzahl der Getriebeeingangswelle 20,
$n_H$ die Drehzahl des Hohlrades 72 und
a die Standardübersetzung eines als Umlauf-Rädergetriebe ausgebildetes Verzweigungsgetriebes.

Für die Standardübersetzung a des Planetengetriebes 66 gilt:

$$a = Z_H/Z_S.$$

Hierbei ist:

$Z_H$ die Zähnezahl des Hohlrades 72 und,
$Z_S$ die Zähnezahl des Sonnenrades 64.

Somit ist die Drehzahl $n_R$ des Rotors 20:

$$n_R = (1+Z_H/Z_S)*n_{Ge}-Z_H/Z_S*n_H.$$

Die Drehzahl $n_H$ des Hohlrades 72 ist abhängig von der Übersetzung des als Auskoppelstufe dienenden Zahnradpaares 34 wobei das Zahnrad 33 die Zähnezahl $Z_{33}$ und das Zahnrad 35 die Zähnezahl $Z_{35}$ hat. Hieraus ergibt sich eine Übersetzung: $i = Z_{35}/Z_{33}$. Weiterhin ist die Drehzahl $n_H$ des Hohlrades 72 abhängig von der Fahrzeuggeschwindigkeit, die bei eingelegtem Gang in einem festen, gangabhängigen Verhältnis zur Drehzahl $n_{Ge}$ steht. Je nach Motorisierung des Fahrzeugs kann eine Übersetzung i des Zahnradpaares 35 gewählt werden.

Bei einem Gangwechsel wird die von der Verbrennungskraftmaschine 12 erzeugte Zugkraft im Getriebe 38 unterbrochen. Die Zugkraft wird dadurch unterbrochen, daß die drehfeste Verbindung einer Schalteinheit 42 mit einem Losrad im Getriebe 38 durch Verschieben der Schalteinheit 42 mittels eines Getriebestellers 44 unterbrochen wird. Bei einem Gangwechsel wird nun eine Zugkraft über das Planetengetriebe 70 geleitet. Hierzu ist die Kupplung 16 geschlossen. Eine von der Verbrennungskraftmaschine 12 als Drehmoment wirkende Zugkraft wird in den Planetenträger 70 eingeleitet. Gleichzeitig steuert die Steuerung 52 die Elektromaschine 22a, die auch eine als Drehmoment wirkende Zugkraft erzeugt. Die Summe der Drehmomente der Verbrennungskraftmaschine 12, der Elektromaschine 22a und das am Hohlrad 72 wirkende Drehmoment sind in Summe Null. Damit kann das Drehmoment der Verbrennungskraftmaschine 12 abgestützt durch die Elektromaschine 22a auf die Getriebeausgangswelle geleitet werden. Somit wird auch die Getriebeausgangswelle 36 und schließlich über die Achse 46 die Räder 48 angetrieben. Die Drehzahl nR des Rotors 28 und somit der Elektromaschine 22a wird durch die Steuerung 52 so beeinflußt, daß sich die Beschleunigung des Kraftfahrzeugs während eines Gangwechsels nicht oder nur gering ändert. Insbesondere soll das Vorzeichen der Beschleunigung nicht ändern, damit die Verspannung des Antriebsstranges 10a erhalten bleibt. Durch die Verspannung des Antriebsstranges 10a kommt es zu keinen Vibrationen und Stößen durch die Verbrennungskraftmaschine 12.

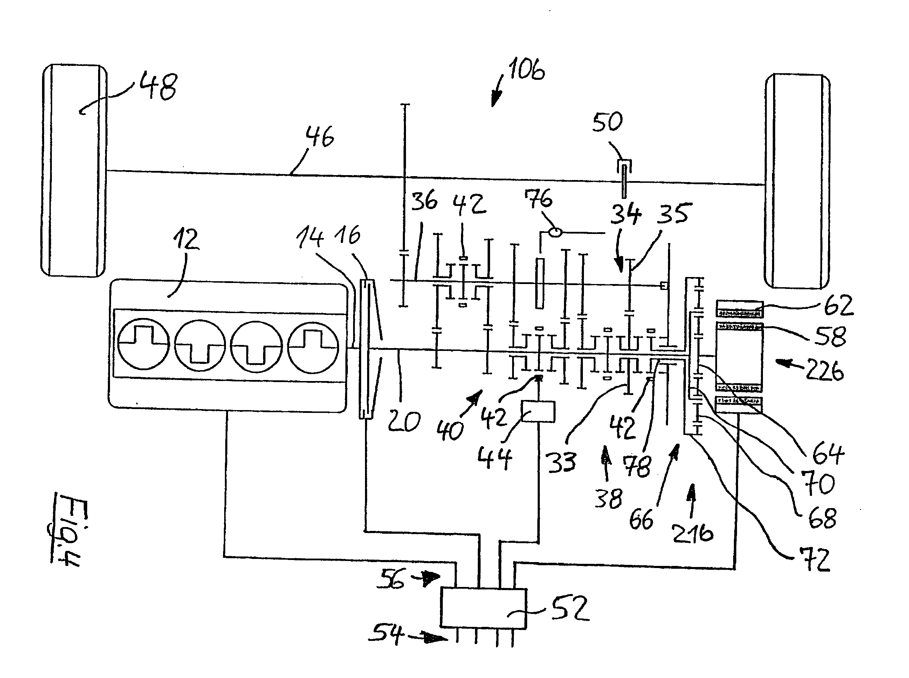

Ist die Elektromaschine 22a für geringe Leistungen ausgelegt, kann es bei sehr hohen Drehmomenten der Verbrennungskraftmaschine 12 vorkommen, daß die Elektromaschine 22a nicht das ganze Drehmoment übertragen kann. In diesem Fall wird das Drehmoment der Verbrennungskraftmaschine 12 durch die Steuerung 52 reduziert. In der Tabelle in der Figur 4 sind die Drehzahlen $n_R$ der Elektromaschine 22a und das von der Elektromaschine 22a gelieferten Drehmomente anhand von konkreten Übersetzungen eines üblichen Antriebsstrangs 10a beispielhaft dargestellt. Die Parameter hierfür sind:

eine Standardübersetzung a des Planetengetriebes 66,
eine Übersetzung i des Zahnradpaares 34,
eine Spalte mit Drehzahlen $n_{Ge}$ der Getriebeeingangswelle 20, fünf Spalten mit Übersetzungen der Gänge 1 bis 5 für das fahrende Fahrzeug und
eine Spalte bei stehenden Fahrzeug, wo die Drehzahl $n_{Ga}$ der Getriebeausgangswelle Null ist.

Unter den Werten der Gänge 1 bis 5 und dem stehenden Fahrzeug sind jeweils die resultierenden Drehzahlen $n_G$ der Elektromaschine 22a dargestellt. Soll zum Beispiel eine Schaltung vom 2. in den 3. Gang bei einer Drehzahl der Getriebeeingangswelle $n_{Ge}$ von 2400 1/min durchgeführt werden, so dreht die Elektromaschine 22a im 2. Gang mit einer Drehzahl $n_R$ von 8700 1/min. Eine Elektromaschine 22a mit 6kW Leistung kann dabei ein Drehmoment der Verbrennungskraftmaschine 12 von 21 Nm abstützen. Ist das Drehmoment der Verbrennungskraftmaschine 12 größer, muß es auf diesen Wert reduziert werden. Die Elektromaschine 22a stellt ihr Drehmoment in diesem Fall zum Abstützen des Drehmoments der Verbrennungskraftmaschine 12 zur Verfügung. Damit ist das Getriebe 38 überbrückt. Der 2. Gang kann ausgelegt werden. Durch leichtes Absenken des Drehmoments der Verbrennungskraftmaschine 12 wird die Drehzahl der Getriebeeingangswelle 20 angepaßt. Die Elektromaschine 22a leitet in der Zeit in der das Getriebe 38 durch die Kupplungen 42 offen ist, über das Planetengetriebe 66 ihr Drehmoment und das der Verbrennungskraftmaschine 12 auf die Getriebeausgangswelle 36. Eine Zugkraftunterbrechung findet somit während der Schaltung nicht statt, da das Drehmoment der Elektromaschine 22a und das Drehmoment der Verbrennungskraftmaschine 12 während der Schaltung aufrecht erhalten bleibt.

Bei einer entsprechenden Auslegung des Antriebsstranges 10a kann die Kupplung 16 entfallen. Die erforderliche Zugkraft zum Anfahren kann durch die Elektromaschine 22a unter Nutzung einer von der Verbrennungskraftmaschine 12 erzeugten Zugkraft über das Planetengetriebe 66 auf die Getriebeausgangswelle 36 übertragen werden; dies zumindest solange, bis die Synchrondrehzahl des ersten Gangs erreicht ist.

Bei der Elektromaschine 22b des Antriebsstrangs 10b in der Figur 4 kann eine Hohlwelle für den Rotor 58 entfallen. Die Elektromaschine 22b der Vorrichtung 21b ist hierzu an dem der Verbrennungskraftmaschine 12 entfernten Ende der Getriebeeingangswelle 20 angeordnet. Das Planetengetriebe 66 ist zwischen dem Getriebe 38 und der Elektromaschine 22b angeordnet. Über eine Hohlwelle 78 und eine Schalteinheit 42 ist das Hohlrad 72 des Planetengetriebes 66 mit dem Zahnradpaar 34 koppelbar. Vorteilhaft ist, daß zwischen den Übersetzungen der Gänge die Elektromaschine 22b in ihrer Drehzahl umgeschaltet werden kann. Dadurch kann die EM für einen engeren Drehzahlbereich ausgelegt werden kann. Beim Starten der Verbrennungskraftmaschine 12 kann auf ein Festhalten mit der Feststelleinrichtung 50 oder der Parksperre 76 verzichtet werden.

Es sind auch Alternativen denkbar. Beispielsweise kann der Rotor 58 mit dem Planetenträger 70 verbunden sein und die Verbrennungskraftmaschine 12 das Sonnenrad 64 oder das Hohlrad 72 antreiben. Die anderen Komponenten des Planetengetriebes 66 müssen dann entsprechend getauscht werden.

**Patentansprüche**

1.   Antriebsstrang für ein Kraftfahrzeug mit mindestens einer Kupplung (16 bzw. 42) zur Unterbrechung der Zugkraft in einem Getriebe (38) bei einem Gangwechsel, bei dem die Zugkraft von einer Verbrennungskraftmaschine (12) auf das Getriebe (38), insbesondere ein automatisiertes Schaltgetriebe, übertragen wird, wobei bei einer Unterbrechung der Zugkraft im Getriebe (38) eine Vorrichtung (21, 21a, 21b) zur Übertragung einer Zugkraft auf eine Abtriebsseite des Getriebes (38) durch Überbrücken des Getriebes (38) vorgesehen ist, **dadurch gekennzeichnet, daß** die Vorrichtung (21, 21a, 21b) eine Elektromaschine (22, 22a, 22b) aufweist.

2.   Antriebsstrang nach Anspruch 1, **dadurch gekennzeichnet, daß** die Elektromaschine (22) zur Übertragung der Zugkraft wenigstens einen ersten drehbar gelagerten Stator (26) und wenigstens einen ersten, mit dem wenigstens ersten Stator (26) zusammenwirkenden, sowie von der Verbrennungskraftmaschine (12) angetriebenen Rotor (24) aufweist.

3.   Antriebsstrang nach Anspruch 2, **dadurch gekennzeichnet, daß** der wenigstens erste Stator (26) auf eine Getriebeausgangswelle (36) einwirkt.

4.   Antriebsstrang nach Anspruch 2 oder 3, **dadurch gekennzeichnet, daß** der wenigstens erste Rotor (24) drehfest mit einer Ausgangswelle (14) der Verbrennungskraftmaschine (12) verbunden ist.

5.   Antriebsstrang nach einem der Ansprüche 2 bis 4, **dadurch gekennzeichnet, daß** der wenigstens erste Rotor (24) über ein festes Übersetzungsverhältnis mit einer Ausgangswelle (14) der Verbrennungskraftmaschine (12) verbunden ist.

6.   Antriebsstrang nach einem der Ansprüche 2 bis 5, **dadurch gekennzeichnet, daß** die Elektromaschine (22) zur Versorgung des elektrischen Bordnetzes des Kraftfahrzeuges verwendet wird.

7.   Antriebsstrang nach einem der Ansprüche 2 bis 6, **dadurch gekennzeichnet, daß** die Elektromaschine (22) zum Starten der Verbrennungskraftmaschine (12) verwendet wird.

8.   Antriebsstrang nach einem der Ansprüche 2 bis 7, **dadurch gekennzeichnet, daß** die Elektromaschine (22) einen zweiten Stator (30) und einen mit dem zweiten Stator (30) zusammenwirkenden sowie drehfest mit einer Getriebeeingangswelle (20) verbundenen zweiten Rotor (28) aufweist, so daß die Elektromaschine (22) zur Synchronisation der Drehzahl der Getriebeeingangswelle (20) verwendbar ist.

9.   Antriebsstrang nach einem der Ansprüche 2 bis 8, **dadurch gekennzeichnet, daß** eine Feststelleinrichtung (50) zum Verhindern eines Drehens einer Getriebeausgangswelle (36) vorgesehen ist.

10.   Antriebsstrang nach einem der Ansprüche 2 bis 9, **dadurch gekennzeichnet, daß** die Elektromaschine (22) um eine Getriebeeingangswelle (20) angeordnet ist.

11.   Antriebsstrang nach Anspruch 1, **dadurch gekennzeichnet, daß** die Elektromaschine (22a, 22b) mit einem Verzweigungsgetriebe (66) zusammenwirkt, das auf eine Getriebeausgangswelle (36) einwirkt.

12.   Antriebsstrand nach Anspruch 11, **dadurch gekennzeichnet, daß** das Verzweigungsgetriebe ein Räder-Umlaufgetriebe (66) ist.

13. Antriebsstrang nach Anspruch 11 oder 12, **dadurch gekennzeichnet, daß** das Verzweigungsgetriebe ein Planetengetriebe (66) ist, daß der Rotor (58) der Elektromaschine (22a, 22b) mit dem Sonnenrad (64) des Planetengetriebes (66) verbunden ist, daß das Sonnenrad (64) mit Planetenrädern (65) im Eingriff steht, daß der Planetenträger (70) von der Verbrennungskraftmaschine (12) antreibbar ist und daß das Hohlrad (72) auf die Getriebeausgangswelle (36) einwirkt, und daß der Stator (62) der Elektromaschine (22a, 22b) am Getriebegehäuse befestigt ist.

**Claims**

1. Drive train for a motor vehicle with at least one clutch (16 or 42) for interrupting the tractive power in a transmission (38) during a gear change, in which the tractive power is transmitted from an internal combustion engine (12) to the transmission (38), in particular an automated shift transmission, a device (21, 21a, 21b) for transmitting a tractive power to an output side of the transmission (38) by bypassing the transmission (38) being provided in the case of an interruption in the tractive power in the transmission (38), **characterized in that** the device (21, 21a, 21b) has an electric machine (22, 22a, 22b).

2. Drive train according to Claim 1, **characterized in that** the electric machine (22) for transmitting the tractive power has at least one first rotatably mounted stator (26) and at least one first rotor (24), which interacts with the at least first stator (26) and is driven by the internal combustion engine (12).

3. Drive train according to Claim 2, **characterized in that** the at least first stator (26) acts on a transmission output shaft (36).

4. Drive train according to Claim 2 or 3, **characterized in that** the at least first rotor (24) is connected in a manner fixed against relative rotation to an output shaft (14) of the internal combustion engine (12).

5. Drive train according to one of Claims 2 to 4, **characterized in that** the at least first rotor (24) is connected to an output shaft (14) of the internal combustion engine (12) by means of a fixed transmission ratio.

6. Drive train according to one of Claims 2 to 5, **characterized in that** the electric machine (22) is used to supply the on-board electrical system of the motor vehicle.

7. Drive train according to one of Claims 2 to 6, **characterized in that** the electric machine (22) is used to start the internal combustion engine (12).

8. Drive train according to one of Claims 2 to 7, **characterized in that** the electric machine (22) has a second stator (30) and a second rotor (28), which interacts with the second stator (30) and is connected in a manner fixed against relative rotation to a transmission input shaft (20), allowing the electric machine (22) to be used to synchronize the rotational speed of the transmission input shaft (20).

9. Drive train according to one of Claims 2 to 8, **characterized in that** a fixing device (50) is provided to prevent rotation of a transmission output shaft (36).

10. Drive train according to one of Claims 2 to 9, **characterized in that** the electric machine (22) is disposed about a transmission input shaft (20).

11. Drive train according to Claim 1, **characterized in that** the electric machine (22a, 22b) interacts with a branching gear (66), which acts on a transmission output shaft (36).

12. Drive train according to Claim 11, **characterized in that** the branching gear is a wheel-revolution gear (66).

13. Drive train according to Claim 11 or 12, **characterized in that** the branching gear is a planetary gear (66), **in that** the rotor (58) of the electric machine (22a, 22b) is connected to the sun wheel (64) of the planetary gear (66), **in that** the sun wheel (64) is in engagement with planet wheels (65), **in that** the planet carrier (70) can be driven by the internal combustion engine (12), **in that** the annulus (72) acts on the transmission output shaft (36), and **in that** the stator (62) of the electric machine (22a, 22b) is secured on the transmission case.

**Revendications**

1. Ligne de transmission pour un véhicule automobile comportant au moins un embrayage (16, 42) pour couper la transmission de la force de traction dans une boîte de vitesses (38) lors d'un changement de rapport, selon lequel la force de traction est transmise par un moteur à combustion interne (12) à la boîte de vitesses (38) notamment une boîte de vitesses automatique,
et en cas de coupure de la force de traction dans la boîte de vitesses (38), un dispositif (21, 21a, 21b) assure la transmission de la force de traction vers le côté de sortie de la boîte de vitesses (38) en shuntant la boite de vitesses (38),

**caractérisée en ce que**

le dispositif (21, 21a, 21b) comprend une machine électrique (22, 22a, 22b).

**2.** Ligne de transmission selon la revendication 1,
**caractérisée en ce que**

pour transmettre la force de traction la machine électrique (22) comporte au moins un premier stator (26) monté à rotation, et au moins un premier rotor (24) coopérant avec le premier stator (26) et entraîné par le moteur à combustion interne (12).

**3.** Ligne de transmission selon la revendication 2,
**caractérisée en ce qu'**

au moins le premier stator (26) agit sur l'arbre de sortie (36) de la boîte de vitesses.

**4.** Ligne de transmission selon l'une quelconque des revendications 2 ou 3,
**caractérisée en ce qu'**

au moins le premier rotor (24) est relié solidairement en rotation à l'arbre de sortie (14) du moteur à combustion interne (12).

**5.** Ligne de transmission selon l'une quelconque des revendications 2 à 4,
**caractérisée en ce qu'**

au moins le premier rotor (24) est relié par un rapport de démultiplication fixe à l'arbre de sortie (14) du moteur à combustion interne (12).

**6.** Ligne de transmission selon l'une quelconque des revendications 2 à 5,
**caractérisée en ce que**

la machine électrique (22) est utilisée pour assurer l'alimentation électrique du réseau embarqué du véhicule.

**7.** Ligne de transmission selon l'une quelconque des revendications 2 à 6,
**caractérisée en ce que**

la machine électrique (22) est utilisée pour démarrer le moteur à combustion interne (12).

**8.** Ligne de transmission selon l'une quelconque des revendications 2 à 7,
**caractérisée en ce que**

la machine électrique (22) comprend un second stator (30) et un second rotor (28) reliés solidairement à l'arbre d'entrée (20) de la boîte de vitesse et coopérant avec le second stator (30) pour que la machine électrique (22) permette de synchroniser la vitesse de rotation de l'arbre d'entrée (20) de la boîte de vitesses.

**9.** Ligne de transmission selon l'une quelconque des revendications 2 à 8,
**caractérisée par**

une installation de blocage (50) pour interdire la rotation de l'arbre de sortie (36) de la boîte de vitesses.

**10.** Ligne de transmission selon l'une quelconque des revendications 2 à 9,
**caractérisée en ce que**

la machine électrique (22) est installée autour de l'arbre d'entrée (20) de la boîte de vitesses.

**11.** Ligne de transmission selon la revendication 1,
**caractérisée en ce que**

la machine électrique (22a, 22b) coopère avec un différentiel (66) agissant sur l'arbre de sortie (36) de la boîte de vitesses.

**12.** Ligne de transmission selon la revendication 11,
**caractérisée en ce que**

le différentiel est un différentiel à roue satellite (66).

**13.** Ligne de transmission selon l'une quelconque des revendications 11 ou 12,
**caractérisée en ce que**

le différentiel est un différentiel planétaire (66), le rotor (58) de la machine électrique (22a 22b) étant relié à la roue solaire (64) de la transmission planétaire (66), la roue solaire (64) étant en prise avec des roues planétaires (65), et le support (70) des roues planétaires est entraîné par le moteur à combustion interne (12), la roue à denture creuse (72) agit sur l'arbre de sortie (36) de la boîte de vitesses et le stator (62) de la machine électrique (22a, 22b) est fixé au boîtier de transmission.

Fig.1

Fig.2

| Standüberset-zung a | 3,2 |
|---|---|
| Übersetzung i Zahnradpaar 35 | 0,35 | 2,86 |

Spreizung Getriebe 38
5,1245

$$P = \frac{2\pi n}{60} * M$$

P[W]= 6000

| Gang | 1 | 2 | 3 | 4 | 5 | stehendes Fahrzeug nGa = 0 | 1 | 2 | 3 | 4 | 5 | stehendes Fahrzeug nGa = 0 |
|---|---|---|---|---|---|---|---|---|---|---|---|---|
| Übersetzung | 3,5 | 1,95 | 1,226 | 0,838 | 0,683 | | 3,5 | 1,95 | 1,226 | 0,838 | 0,683 | |
| | | 1,795 | 1,591 | 1,463 | 1,227 | | | | | | | |
| Drehzahl Getriebe-eingangswelle nGe | Drehzahl der Elektromaschine nR | | | | | | Mögliches Drehmoment der Verbrenungskraftmsachine 12, das die Elektromaschine 22a abstützen kann, in Nm | | | | | |
| 100 | | | | | | 420,0 | | | | | | 436,54 |
| 800 | 3104,0 | 2900,5 | 2629,2 | 2290,8 | 2048,1 | 3360,0 | 59,07 | 63,21 | 69,74 | 80,04 | 89,52 | 54,57 |
| 1000 | 3880,0 | 3625,6 | 3286,5 | 2863,5 | 2560,2 | 4200,0 | 47,25 | 50,57 | 55,79 | 64,03 | 71,61 | 43,65 |
| 1200 | 4656,0 | 4350,8 | 3943,8 | 3436,2 | 3072,2 | 5040,0 | 39,38 | 42,14 | 46,49 | 53,36 | 59,68 | 36,38 |
| 1400 | 5432,0 | 5075,9 | 4601,0 | 4008,9 | 3584,2 | 5880,0 | 33,75 | 36,12 | 39,85 | 45,74 | 51,15 | 31,18 |
| 1600 | 6208,0 | 5801,0 | 5258,3 | 4581,6 | 4096,3 | 6720,0 | 29,53 | 31,61 | 34,87 | 40,02 | 44,76 | 27,28 |
| 1800 | 6984,0 | 6526,2 | 5915,6 | 5154,3 | 4608,3 | 7560,0 | 26,25 | 28,09 | 30,99 | 35,57 | 39,79 | 24,25 |
| 2000 | 7760,0 | 7251,3 | 6572,9 | 5727,0 | 5120,4 | 8400,0 | 23,63 | 25,28 | 27,89 | 32,01 | 35,81 | 21,83 |
| 2400 | 9312,0 | 8701,5 | 7887,5 | 6872,4 | 6144,4 | 10080,0 | 19,69 | 21,07 | 23,25 | 26,68 | 29,84 | 18,19 |
| 2800 | 10864,0 | 10151,8 | 9202,1 | 8017,8 | 7168,5 | 11760,0 | 16,88 | 18,06 | 19,92 | 22,87 | 25,58 | 15,59 |
| 3200 | 12416,0 | 11602,1 | 10516,7 | 9163,2 | 8192,6 | 13440,0 | 14,77 | 15,80 | 17,43 | 20,01 | 22,38 | 13,64 |
| 3600 | 13968,0 | 13052,3 | 11831,3 | 10308,5 | 9216,6 | 15120,0 | 13,13 | 14,05 | 15,50 | 17,79 | 19,89 | 12,13 |
| 4000 | 15520,0 | 14502,6 | 13145,8 | 11453,9 | 10240,7 | 16800,0 | 11,81 | 12,64 | 13,95 | 16,01 | 17,90 | 10,91 |
| 4400 | 17072,0 | 15952,8 | 14460,4 | 12599,3 | 11264,8 | 18480,0 | 10,74 | 11,49 | 12,68 | 14,55 | 16,28 | |
| 4800 | 18624,0 | 17403,1 | 15775,0 | 13744,7 | 12288,8 | 20160,0 | 9,84 | 10,54 | 11,62 | 13,34 | 14,92 | |
| 5200 | 20176,0 | 18853,3 | 17089,6 | 14890,1 | 13312,9 | 21840,0 | 9,09 | 9,72 | 10,73 | 12,31 | 13,77 | |
| 5600 | 21728,0 | 20303,6 | 18404,2 | 16035,5 | 14337,0 | 23520,0 | 8,44 | 9,03 | 9,96 | 11,43 | 12,79 | |
| 6000 | 23280,0 | 21753,8 | 19718,8 | 17180,9 | 15361,1 | 25200,0 | 7,88 | 8,43 | 9,30 | 10,67 | 11,94 | |

Fig. 3

Fig.4